Europäisches Patentamt

European Patent Office

Office européen des brevets

(19)

(11) Veröffentlichungsnummer: **0 080 625**
**B1**

(12) **EUROPÄISCHE PATENTSCHRIFT**

(45) Veröffentlichungstag der Patentschrift:
26.02.86

(21) Anmeldenummer: **82110395.9**

(22) Anmeldetag: **11.11.82**

(51) Int. Cl.⁴: **B 65 G 15/16, B 65 G 21/10,
B 65 G 67/60**

(54) Umlenkstation für in Verladeanlagen mit senkrechten und waagerechten Förderzweigen angeordnete Bandförderer mit einem durch ein Deckband abgeschlossenen Wellkantengurt.

(30) Priorität: 13.11.81 DE 3145104

(43) Veröffentlichungstag der Anmeldung:
08.06.83 Patentblatt 83/23

(45) Bekanntmachung des Hinweises auf die Patenterteilung:
26.02.86 Patentblatt 86/9

(84) Benannte Vertragsstaaten:
AT BE CH DE FR GB IT LI LU NL SE

(56) Entgegenhaltungen:
DE - A - 1 922 636
DE - A - 2 631 643
DE - A - 2 726 038

(73) Patentinhaber: Bühler-MIAG GmbH,
Ernst-Amme-Strasse 19, D-3300 Braunschweig (DE)

(72) Erfinder: Gsponer, Arnold, Ing. grad., Feldholzstrasse 11,
CH-9241 Oberuzwil (CH)
Erfinder: Huber, Werner, Meitnerweg 10,
D-3300 Braunschweig (DE)
Erfinder: Petrovic, Milan, Backhausweg 10,
D-3300 Braunschweig (DE)

## Beschreibung

Die Erfindung bezieht sich auf eine Umlenkstation für einen in Verladeanlagen mit senkrechten und waagerechten Förderzweigen angeordneten Bandförderer, mit einem durch ein Deckband abgeschlossenen Wellkantengurt, der wenigstens zwei Abschnitte umfaßt, von denen einer relativ zum anderen lageveränderlich ist, und mit entsprechend der Bandumlenkung auf einem Traggerüst gruppenweise angeordneten Stützrollen, welche die Abstüzstellen für den Bandförderer und das Deckband bilden. Unter Traggerüst im erfindungsgemäßen Sinn wird hierbei die tragende Stahlkonstruktion eines Bandabschnittes von zwei durch ein Gelenkachse relativ zueinander beweglichen Abschnitten des Bandförderers verstanden (siehe z.B. DE—A—26 31 643).

Förderanlagen der hier angesprochenen Art, wie sie beispielsweise zum Entladen von Schiffen und anderem eingesetzt werden, haben gewöhnlich einen in einem Aufbau bzw. in einem Turm gelagerten, einzieh- und auslegbaren Ausleger sowie ein an dessen vorderes Ende angehängtes, senkrecht oder schräg einstellbares Gerüst. Ausleger und Gerüst nehmen je einen Förderzweig eines Bandförderers auf, der entweder ein durchgehendes Förderband mit einer Bandumlenkstation im Gelenkpunkt zwischen beiden umfaßt oder für jeden Förderzweig ein gesondertes Förderband mit einer Übergabestation in dem besagten Gelenkpunkt aufweist. Eine am unteren Ende des Gerüstes angebrachte Gutzuführeinrichtung wie Schaufeltrommel, Schaufelrad oder dergleichen beschickt den einen Förderzweig, Gutableitmittel bzw. Zwischenförderer übernehmen das Gut von dem nachgeordneten, zweiten Förderzweig und transportieren es weiter. Hierbei kann am unteren Ende des Gerüstes bzw. des ersten Förderzweiges eine weitere Umlenkstation vorgesehen und das Förderband noch einmal umgelenkt und bis in die Gutzuführeinrichtung hinein geführt sein.

Bei den Arbeitsbewegungen von Ausleger, Gerüst oder Gutzuführeinrichtung erfahren die Bandabschnitte des Bandförderers Relativbewegungen zueinander, wobei sich der von den Bandabschnitten eingeschlossene Winkel und damit auch der Umschlingungswinkel in den Umlenkstationen ändert. Da dies im Bereich der Umlenkstationen auch eine Relativbewegung zwischen den am Traggerüst gelagerten Stützrollen einerseits und dem Bandförderer und seinem Deckband andererseits bedeutet, besteht hier die Gefahr schädlicher Beanspruchungen zwischen beiden und folglich von Deformationen und Beschädigungen an den Stützrollen und ihren Lagerungen sowie an Bandförderer und Deckband selbst.

Der Erfindung liegt die Aufgabe zugrunde, eine Umlenkstation für Bandförderer mit Wellkantengurt und Deckband zu verwirklichen, welche schädliche Beanspruchungen ausschließt und sich sowohl für Positivumlenkungen als auch für Negativumlenkungen eignet.

Gemäß der Erfindung ist diese Aufgabe dadurch gelöst, daß die radial außen liegenden Stützrollen der Rollengruppen wenigstens einer Anzahl von Abstützstellen des Deckbandes oder des Bandförderers an einem formveränderlichen, der Bewegung des Bandförderers bzw. Deckbandes folgenden Rollenhalter angeordnet sind. Dieser formveränderliche Rollenhalter bzw. die Anbringung der besagten Stützrollen an ihm bewirkt, daß bei den angesprochenen Lageveränderungen der Bandabschnitte zueinander die Stützrollen unter voller Aufrechterhaltung ihres Abstützeffektes synchron mitbewegt werden und Kollisionen zwischen ihnen und dem Bandförderer sowie dem Deckband zuverlässig vermieden werden. Eine im Aufbau einfache und allen Anforderungen in punkto Beweglichkeit gerecht werdende Ausbildungsform besteht nach der weiteren Erfindung darin, daß der Rollenhalter gelenkkettenartig ausgebildet ist, dessen eines Ende gelenkig am Traggerüst verankert ist und dessen anderes Ende an Spannmittel angeschlossen ist. Um einerseits die nötige Quersteifigkeit zwischen der Bandabstützung auf der einen Längsseite und derjenigen auf der anderen Längsseite zu erreichen und andererseits zwischen den Stützrollen des Deckbandes und den Stützrollen des Bandförderers einen bestimmten radialen Achsabstand gegen schädliches Pressen bzw. kraftübertragenden Berührungskontakt zu garantieren, ist nach einem anderen Erfindungsmerkmal der Rollenhalter aus den Bandförderer und das Deckband überspannenden Lagerjochen gebildet, die untereinander durch Verbindungsglieder gelenkig verbunden sind und je mit ihren beiden Enden auf am Traggerüst befestigten Tragelementen ruhen, welche radial geführt und durch Stellmittel einstellbar sind. Gemäß einer bevorzugten konstruktiven Ausbildung ist dabei nach der weiteren Erfindung jedes Lagerjoch aus einer Bandförderer und Deckband übergreifenden Traverse sowie zwei zu einer Einheit mit dieser verbundenen, an den Längsseiten des Bandförderers angeordneten Lagerkörpern zusammengesetzt, die je mindestens eine Lagerachse aufnehmen, auf welcher eine Stützrolle für das Deckband oder den Bandförderer gelagert ist. Damit beim Abheben der Lagerjoche von ihren Tragelementen im Traggerüst, wie es im Fall von Relativbewegungen zwischen den Bandabschnitten vorkommt, die Stützrollen sich nicht bei Positivumlenkungen auf den Bandförderer und bei Negativumlenkungen auf das Deckband legen und eventuell dessen Lauf beeinträchtigen können, ist der erfindungsgemäße Rollenhalter gewichtsmäßig abgefangen. Dies geschieht nach einer weiteren erfindungsgemäßen Ausbildung dadurch, daß der Rollenhalter auf beiden Seiten des Bandförderers mit Laufrollen versehen ist, denen auf jeder Seite des Bandförderers eine mit einem seiner Bandabschnitte bewegungsmäßig zu einer Einheit verbundene Tragschiene zugeordnet ist. Die Laufrollen werden zweckmäßig auf den entsprechend lang bemessenen Lagerachsen der Stützrollen angeordnet, wodurch gesonderte Lagerachsen eingespart werden.

Gemäß einem weiteren ausgestaltenden Erfindungsmerkmal weist das Traggerüst zum Aufnehmen der Lagerjoche des Rollenhalters zwei Tragsegmente auf, die je im Bereich einer Längsseite des Bandförderers auf einem Achssegment gelagert und mittels Stellmittel auf diesem einstellbar sind, wobei die beiden Achssegmente auf einem gemeinsamen, die Umlenkachse verkörpernden Achsbalken befestigt sind. Durch diese Ausbildung des Traggerüstes wird erreicht, daß Fertigungsungenauigkeiten auf einfache Weise ausgeglichen werden können und der Bandlauf leicht und in kürzester Zeit korrigiert werden kann.

Weitere Merkmale und Einzelheiten der Umlenkstation nach der Erfindung werden im nachfolgenden anhand eines in den Zeichnungen veranschaulichten Ausführungsbeispiels beschrieben.

Es zeigen

Figur 1 das Bindlaufschema eines Entladegerätes zum Entladen von Schiffen mit einem in drei Bandabschnitte gegliederten und über zwei Umlenkstationen geführten Bandförderer und einem diesem zugeordneten Deckband,

Figur 2 einen Ausschnitt aus dem Bandlaufschema nach Figur 1 im Bereich der oberen Umlenkstation des Entladegerätes, jedoch mit einer anderen Relativstellung der Bandabschnitte,

Figur 3 einen der Figur 2 entsprechenden Ausschnitt aus dem Bandlaufschema nach Figur 1 mit einer weiteren Relativstellung der Bandabschnitte,

Figur 4 eine Seitenansicht einer konstruktiven Ausbildungsform der oberen Umlenkstation des Entladegerätes im größeren Maßstab,

Figur 5 einen Schnitt durch die Umlenkstation nach Linie V—V in Figur 4, jedoch in einem anderen Maßstab und

Figur 6 eine der Figur 4 entsprechende Seitenansicht der Umlenkstation, wobei der Rollenhalter für die ortsveränderlich gelagerten Stützrollen und die seinen Laufrollen zugeordneten Tragschienen in einer mittleren Stellung und außerdem in den beiden Endstellungen dargestellt sind.

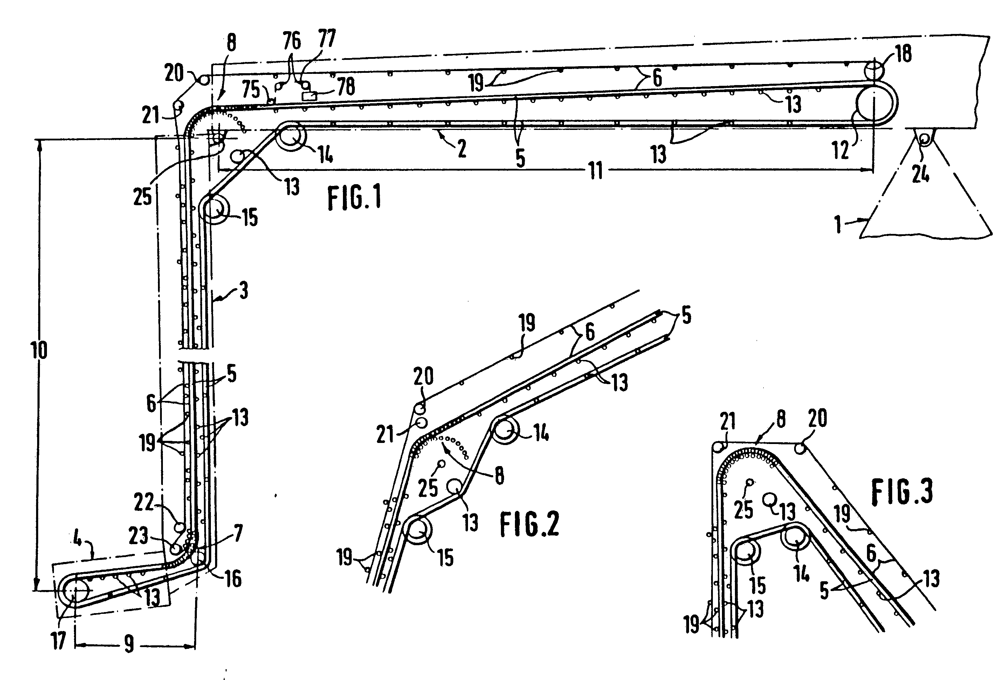

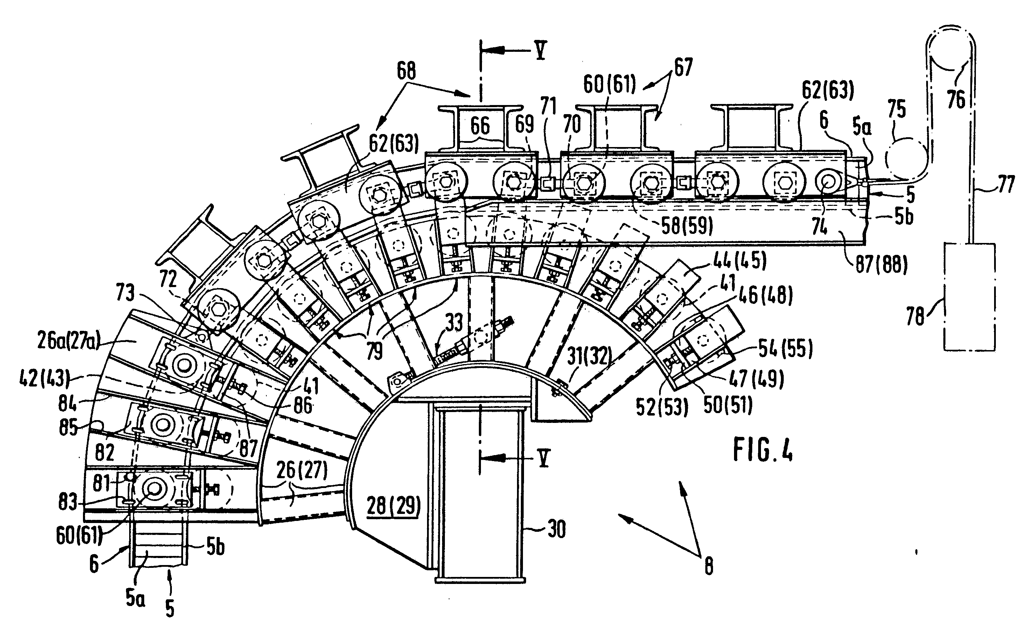

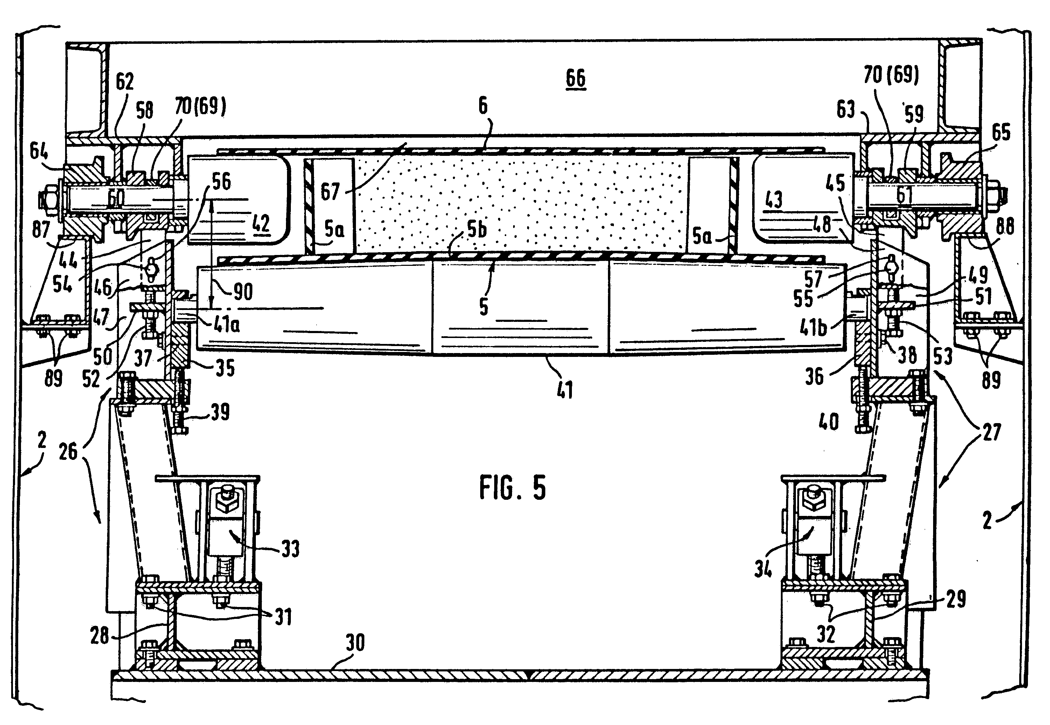

Die Umlenkstation nach der Erfindung ist bei dem dargestellten Beispiel Teil eines Entladegerätes zum Entladen von Schiffen, beispielsweise zum Entladen von Getreide, Kohle oder anderem Schüttgut, das im wesentlichen aus einem drehbaren Turm 1, einem an diesem schwenkbeweglich gelagerten, einzieh- und auslegbaren Ausleger 2, einem mit dem vorderen Ende des Auslegers 2 gelenkig verbundenen, in bekannter Weise durch eine Stellvorrichtung wie Zylinder-Kolbensystem, Spindel- oder Zahnstangentrieb oder ähnlichem relativ zum Ausleger 2 verstellbaren Traggerüst 3 sowie einer Gutzuführeinrichtung 4, beispielsweise einer Schaufeltrommel, besteht (Fig. 1). Das Verstellen des Auslegers 2 erfolgt mittels bekannter Vorrichtungen, etwa einem hydraulischen oder pneumatischen Zylinder-Kolbensystem, einem Spindeleinziehwerk, Seileinziehwerk oder anderen bekannten Verstellmitteln. Der Ausleger 2, das Traggerüst 3 und die Tragkonstruktion der Gutzuführeinrichtung 4 nehmen einen Bandförderer 5 in Form eines Wellkantengurtes 5b mit Wellkanten 5a (Fig. 4, 5) auf, dem ein quersteifes Deckband 6 zugeordnet ist. In einer unteren Umlenkstation 7 werden Bandförderer 5 samt Deckband 6 aus der Gutzuführeinrichtung 4 in das Traggerüst 3 umgeleitet, in einer oberen Umlenkstation 8 erfolgt ihre Umlenkung aus dem Traggerüst 3 in den Ausleger 2. Durch diese Umlenkung ergeben sich drei Bandabschnitte, nämlich ein Bandabschnitt 9 im Bereich der Gutzuführeinrichtung 4, ein Bandabschnitt 10 im Bereich des Traggerüstes 3 sowie ein Bandabschnitt 11 im Bereich des Auslegers 2. Außerhalb der beiden Umlenkstationen 7, 8 ist der Bandförderer 5 über eine Antriebstrommel 12, Tragrollen 13 sowie Umlenktrommeln 14, 15, 16, 17 geführt und das Deckband 6 über eine Antriebstrommel 18, Tragrollen 19 sowie Umlenktrommeln 20, 21, 22, 23. Die Schwenkachse des Auslegers 2 am Turm 1 ist mit 24 markiert, die Gelenkachse zwischen Ausleger 2 und Traggerüst 3 mit 25. Die Lageveränderlichkeit von Bandförderer 5 und Deckband 6 im Bereich der Umlenkstation 8, wie sie sich bei Lageveränderungen bzw. beim Verstellen von Ausleger 2 und Traggerüst 3 ergibt, ist in den Figuren 2 und 3 gezeigt. Würde im Gegensatz zu der dargestellten Ausführungsform, bei der die Gutzuführeinrichtung 4 in bezug auf das Traggerüst 3 nicht beweglich bzw. schwenkbeweglich ist, auch eine Verstellbarkeit der Gutzuführeinrichtung 4 vorgesehen, so ergäben sich auch in der Umlenkstation 7 entsprechende Lageveränderungen bei den Bandabschnitten 9 und 10.

Der Aufbau der beiden Umlenkstationen 7 und 8 ist im Hinblick auf ein einwandfreies, beschädigungsloses Führen von Bandförderer 5 und Deckband 6 prinzipiell gleich, unterschiedlich ist lediglich, daß bei der Umlenkstation 8 die ortsveränderlich gelagerten Stützrollen der Rollengruppe einer Anzahl Abstützstellen des Deckbandes wegen der Relativbeweglichkeit der Bandabschnitte 10, 11 an einem formveränderlichen Rollenhalter angeordnet sind, wogegen es bei der Umlenkstation 7 eines solchen Rollenhalters nicht bedarf, die Stützrollen sind hier vielmehr unmittelbar am Traggerüst 3 angebracht, weil zwischen den Bandabschnitten 9, 10 aufgrund der starren Anlenkung der Gutzuführeinrichtung 4 an das Traggerüst 3 keine Relativbewegungen vorkommen.

Wie sich insbesondere aus den Figuren 4 und 5, welche die obere Umlenkstation 8 veranschaulichen, ergibt, sind die eigentlichen tragenden Teile der Umlenkstation zwei Tragsegmente 26, 27, welche je an einer Längsseite des Bandförderers 5 auf je einem Achssegment 28 bzw. 29 gelagert und durch Schrauben 31 bzw. 32 befestigt sind. Nach Lösen der in entsprechenden Langlöchern steckenden Schrauben 31, 32 kann jedes Tragsegment 26, 27 mit Hilfe eines zugeordneten Spindeltriebes 33 bzw. 34 (Fig. 5) in Umfangsrichtung auf seinem Achssegment 28 bzw. 29 verstellt werden. Die beiden Achssegmente 28, 29 sind ihrerseits auf einem gemeinsamen Achsbalken 30 befestigt, der Teil des Traggerüstes 3 (Fig. 1) und durch Schweißen mit diesem verbunden ist.

An jedem der beiden kreisbogenförmigen Tragsegmente 26, 27 sind in gleichmäßiger Verteilung über den Kreisbogen Lagerblöcke 35 bzw. 36 durch Schrauben 37 bzw. 38 befestigt und mittels Schrauben 39 bzw. 40 radial verstellbar; je ein Lagerblock 35 am Tragsegment 26 liegt somit einem Lagerblock 36 am Tragsegment 27 axial gegenüber, und jeder von ihnen kann gegenüber dem anderen mit Hilfe seiner Stellschraube 39 bzw. 40 radial auswärts oder einwärts an dem zugeordneten Tragsegment 26 bzw. 27 verstellt werden.

Jedes dieser aus einem Lagerblock 35 und einem Lagerblock 36 bestehenden Lagerblockpaare bildet die Lagerung für eine den Gurt 5b des Bandförderers 5 tragende Stützrolle 41, deren einer Lagerzapfen 41a von einer entsprechenden Lagerbohrung im Lagerblock 35 und deren anderer Lagerzapfen 41b von einer Lagerbohrung im Lagerblock 36 aufgenommen werden. An den beiden Tragsegmenten 26, 27 sind in denselben radialen Ebenen wie die Stützrollen 41 Tragelemente 44, 45 angeordnet, welche je zwischen zwei parallelen Führungsblechen 46, 47 bzw. 48, 49 liegen und bei Verstellbewegungen von diesen geführt werden. Zwischen diese auf die Tragsegmente 26 bzw. 27 geschweißten Führungsbleche 46, 47 bzw. 48, 49 ist ein Querblech 50 bzw. 51 eingeschweißt, das in einer entsprechenden Gewindebohrung eine Stellschraube 52 bzw. 53 aufnimmt, auf welcher das zugeordnete Tragelement 44 bzw. 45 aufliegt (Fig. 5). Mit Hilfe ihrer Stellschraube 52 bzw. 53 können die Tragelemente 44, 45 auf dem Tragsegment 26 bzw. 27 radial einwärts und radial auswärts verstellt werden. Die Tragelemente 44 bzw. 45 sind an den Führungsblechen 46, 47 bzw. 48, 49 durch je zwei Schrauben 54 bzw. 55 kraftschlüssig gehalten, die durch in den Führungsblechen 46, 47 bzw. 48, 49 vorgesehene Langlöcher 56 bzw. 57 gesteckt sind und beim Verstellen der Tragelemente 44, 45 gelöst werden. Auf jedem der Tragelemente 44, 45 ruht ein im Querschnitt U-förmiger Stützbacken 58 bzw. 59, der auf einer Lagerachse 60 bzw. 61 angeordnet ist. Auf der Lagerachse 60 bzw. 61 sind an ihrem einen Ende eine Stützrolle 42 bzw. 43 für das Deckband 6 und auf ihrem anderen Ende eine Laufrolle 64 bzw. 65 drehbeweglich angeordnet. Die in einer gemeinsamen radialen Ebene liegenden Stützrollen, nämlich eine Stützrolle 41, eine Stützrolle 42 und eine Stützrolle 43, bilden eine Rollengruppe, und jede solche Rollengruppe verkörpert gleichzeitig eine Abstützstelle 79 für Bandförderer 5 und Deckband 6. Je zwei achsparallel nebeneinanderliegende Lagerachsen 60 bzw. 61 sind in einem gemeinsamen Lagerkörper 62 bzw. 63 gelagert (Fig. 4), wobei je ein Lagerkörper 62 auf der einen Bandfördererseite mit je einem Lagerkörper 63 auf der anderen Bandfördererseite durch eine Deckband 6 und Bandförderer 5 übergreifende Traverse 66 fest miteinander verbunden sind und gemeinsam mit dieser ein Lagerjoch 67 bilden. Jedes Lagerjoch 67 nimmt somit an seinem einen Ende zwei Lagerachsen 60 mit je einer Stützrolle 42 und einer Laufrolle 64 und an seinem anderen Ende zwei Lagerachsen 61 mit je einer Stützrolle 43 und einer Laufrolle 65 auf (Fig. 4, 5). Die Lagerjoche 67 sind untereinander gelenkig verbunden und bilden gemeinsam einen formveränderlichen Rollenhalter 68 für die Mehrzahl der ortsveränderlich gelagerten Stützrollen 42, 43 des Deckbandes 6. Zum Verbinden der Lagerjoche 67 dienen auf jeder Seite des Bandförderers 5 je zwei laschenartige Verbindungsglieder 69, 70, welche durch einen Bolzen 71 gelenkig miteinander verbunden sind. Das Verbindungsglied 69 wird von der Achse 60 bzw. 61 eines Lagerjoches 67 drehbeweglich aufgenommen und das Verbindungsglied 70 von der Achse 60 bzw. 61 des angrenzenden, anzukoppelnden Lagerjoches 67 (Fig. 4, 5). Der so gebildete in vertikaler Ebene kettenartig in sich bewegliche Rollenhalter 68 ist mit seinem einen Ende durch je ein auf jeder Bandfördererseite vorgesehenes Anschlußglied 72 sowie einen Bolzen 73 gelenkig an den Ansatz 26a bzw. 27a des Tragsegmentes 26 bzw. 27 angeschlossen (Fig. 4). Die beiden Anschlußglieder 72 sind auf den außenliegenden Lagerachsen 60, 61 des an diesem Rollenhalterende letzten Lagerjoches 67 anstelle zweier Verbindungsglieder 69 angeordnet. Das andere Ende des Rollenhalters 68 ist an Spannmittel angeschlossen, die den Rollenhalter 68 ständig straff halten. Die Spannmittel umfassen auf jeder Seite des Bandförderers 5 je ein mittels Bolzen 74 an der an diesem Rollenhalterende außen gelegenen Traverse 67 befestigtes, über Seilrollen 75, 76 geführtes Seil 77 sowie ein an letzteres angehängtes Gewicht 78. Statt eines Gewichts als Kraftspeicher können auch andere äquivalente Mittel wie vorgespannte Federn, unter Druck stehende hydraulische oder pneumatische Zylinder-Kolbensysteme vorgesehen sein. Die Ausbildung muß hierbei in jedem Fall so getroffen werden, daß bei Reversierbetrieb des Bandförderers 5 in beiden Bewegungsrichtungen desselben die Spannmittel voll wirksam sind und ein Mitnehmen des Rollenhalters 68 ausgeschlossen ist.

Wie die Figur 4 erkennen läßt, sind außer den Abstützstellen 79, deren ortsveränderlich gelagerte Stützrollen 42, 43 an dem formveränderlichen Rollenhalter 68 gelagert sind, im zulaufseitigen Bereich der Umlenkstation 8 drei Abstützstellen 79 vorhanden, deren Rollengruppen keine an diesem Rollenhalter 68 gelagerte Stützrollen 42, 43 haben, da dies im Hinblick auf die maximale Lageveränderung des Bandabschnittes 11 relativ zum Bandabschnitt 10 nicht erforderlich ist. Bei diesen drei Abstützstellen 79 sind die Stützrollen 41 genauso ausgebildet und gelagert in an den Tragsegmenten 26, 27 angebrachten Lagerblöcken 35, 36 wie bei den übrigen Abstützstellen 79. Unterschiedlich ist dagegen bei ihnen die Lagerung der beiden Stützrollen 42, 43 jeder Rollengruppe bzw. Abstützstelle 79, deren Lagerachse 60 bzw. 61 hier von je einem durch Schrauben 81 auf dem Tragsegment 26 bzw. 27 befestigten Lager 82 aufgenommen wird. Der Flansch jedes Lagers 82 ist radial durch zwei auf das Tragsegment 26 bzw. 27 geschweißte Führungsbleche 84, 85 geführt und auf einer Stellschraube 86 abgestützt, welche in eine Gewindebohrung eines Querbleches 87 geschraubt ist, das an die beiden Führungsbleche 84, 85 geschweißt ist. Nach Lösen der Schrauben 81, die in Langlöchern 83 stecken, kann durch entsprechendes Betätigen der Stellschraube 86 das Lager 82 und damit die Lagerachse 60 bzw. 61 samt Stützrolle 42 bzw. 43 radial auswärts oder einwärts gestellt werden. Für das gewichtsmäßige Abfangen des Rollenhalters 68 samt der von ihm aufgenommenen Stützrollen 42, 43 bei einer Stellung des Auslegers 2 relativ zum Traggerüst 3, in welcher die Stützbacken 58, 59 von den Tragelementen 44, 45 abgehoben sind, ist vorne im Ausleger auf jeder Seite eine Tragschiene 87 bzw. 88 mittels Schrauben 89 befestigt, auf der sich seine Lagerjoche 67 mit Hilfe ihrer beiden Laufrollen 64, 65 rollend abstützen (Fig. 4 bis 6).

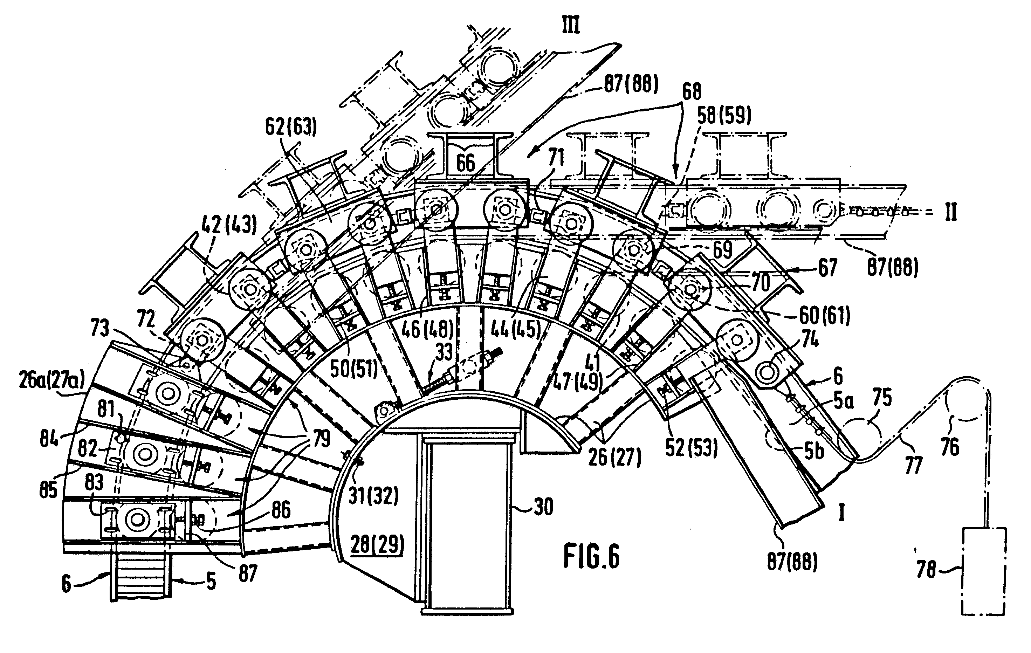

Bei der Montage des Entladegerätes wird der Achsabstand 90 (Fig. 5) zwischen den Stützrollen 41 des Bandförderers 5 und den Stützrollen 42, 43 des Deckbandes 6 durch entsprechendes Betätigen der den Stützrollen zugeordneten Stellmittel in Form der Stellschrauben 52, 53 bzw. 86 so eingestellt, daß Deckband 6 und Wellkanten 5a in der Umlenkstation zwar Berührungskontakt miteinander haben, aber keine Kräfte vom Deckband 6 auf die Wellkanten 5a des Bandförderers 5 übertragen werden, auch nicht in der in dieser Beziehung ungünstigsten Stellung des Auslegers 2 (Fig. 3, Fig. 6—Stellung I). Die entsprechend eingestellten Stützrollen 42, 43 halten das Deckband 6 dermaßen in Position, daß weder Riebung infolge Relativbewegung noch schädliche Pressungen auftreten können, so daß die Wellkanten 5a sich beim Durchlauf des Bandförderers 5 durch die Umlenkstation 8 völlig unbehindert auseinanderziehen und wieder zusammenziehen können und übermäßiger Verschleiß oder gar Zerstörung von Wellkanten 5a und Deckband 6 sicher vermieden werden.

Wird der Ausleger 2 in seiner Relativstellung zum Traggerüst 3 variiert bzw. umgekehrt das Traggerüst 3 gegenüber dem Ausleger 2 verschwenkt, während Bandförderer 5 und Deckband 6 umlaufen, so schwenken die Stützrollen 42, 43 dank ihrer erfindungsgemäßen Anordnung an einem formveränderlichen Rollenhalter 68 synchron mit Ausleger 2, Bandförderer 5 und Deckband 6 mit und halten die eingestellte Lage des Deckbandes 6 gegenüber den Wellkanten 5a des Bandförderers 5 aufrecht; durch das dabei erfolgende Abheben der Stützbacken 58, 59 von den Tragelementen 44, 45 geht zwar deren Stützfunktion verloren, doch wird diese Stützfunktion von den beiden Tragschienen 87, 88 unter Vermittlung der Laufrollen 64, 65 übernommen. Eine einwandfreie Funktionsweise der Stützrollen 41 bis 43 sämtlicher Abstützstellen 79 bleibt also auch bei Relativbewegung zwischen Ausleger 1 und Traggerüst 3 bzw. zwischen Bandabschnitt 11 und Bandabschnitt 10 aufgrund der besagten selbsttätigen Anpassung gewährleistet, und zwar sowohl in bezug auf schädliche Pressung zwischen Wellkanten 5a und Deckband 6 als auch hinsichtlich eines ausreichenden Abschlusses bzw. Abdichtens des Bandförderers 5 von seiten des Deckbandes 6.

Die erfindungsgemäße Umlenkstation kann in ihrer konstruktiven Ausbildung noch verschieden abgewandelt werden. Da, wo die Platzverhältnisse es erlauben, können beispielsweise die Tragsegmente 26, 27 samt Achssegmente 28, 29 durch eine Trommel ersetzt werden, welche anstelle der Stützrollen 41 den Gurt 5b des Bandförderers 5 aufnimmt. Die Stützrollen 41 können zylindrisch oder ballig geformt sein und individuell an beiden Enden verstellbar ausgebildet sein. Des weiteren können die mit den Laufrollen 64, 65 zusammenwirkenden Tragschienen 87, 88 im Ausleger verstellbar angebracht sein. Ferner können die ortsveränderlich gelagerten Stützrollen der Rollengruppen sämtlicher Abstützstellen für das Deckband oder den Bandförderer auf einem formveränderlichen Rollenhalter angeordnet sein, zum Beispiel wenn eine Relativstellung zwischen Ausleger 2 und Traggerüst 3 gefordert wird, die einen extrem großen Winkel zwischen den Bandabschnitten 10 und 11 ergibt.

**Patentansprüche**

1. Umlenkstation (7, 8) für einen in Verladeanlagen mit senkrechten und waagerechten Förderzweigen angeordneten Bandförderer (5) mit einem durch ein Deckband abgeschlossenen Wellkantengurt (5b), der wenigstens zwei Abschnitte (9, 10, 11) umfaßt, von denen einer relativ zum anderen lageveränderlich ist, und mit entsprechend der Bandumlenkung auf einem Traggerüst (3) gruppenweise angeordneten Stützrollen (41, 42, 43), welche die Abstützstellen für den Bandförderer und das Deckband bilden, dadurch gekennzeichnet, daß die radial außen liegenden Stützrollen (42, 43) der Rollengruppen wenigstens einer Anzahl von Abstützstellen (79) des Deckbandes (6) oder des Bandförderers (5) an einem formveränderlichen, der Bewegung des Bandförderers bzw. Deckbandes folgenden Rollenhalter (68) angeordnet sind.

2. Umlenkstation nach Anspruch 1, dadurch gekennzeichnet, daß der Rollenhalter (68) gelenkkettenartig ausgebildet ist, dessen eines Ende gelenkig am Traggerüst (26, 26a; 27, 27a) verankert ist und dessen anderes Ende an Spannmittel (75 bis 78) angeschlossen ist.

3. Umlenkstation nach Anspruch 2, dadurch gekennzeichnet, daß der Rollenhalter (68) aus den Bandförderer (5) und das Deckband (6) überspannenden Lagerjochen (67) besteht, die untereinander durch Verbindungsglieder (69, 70) gelenkig (71) verbunden sind und je mit ihren beiden Enden auf am Traggerüst (26, 27) befestigten Tragelementen (44, 45) ruhen, welche radial geführt (46 bis 49) und durch Stellmittel (52, 53) einstellbar sind.

4. Umlenkstation nach Anspruch 3, dadurch gekennzeichnet, daß jedes Lagerjoch (67) aus einer Bandförderer (5) und Deckband (6) übergreifenden Traverse (66) sowie zwei zu einer Einheit mit dieser verbundenen, an den Längsseiten des Bandförderers (5) angeordneten Lagerkörpern (62, 63) zusammengesetzt ist, die je mindestens eine Lagerachse (60 bzw. 61) aufnehmen, auf welcher eine Stützrolle (42 bzw. 43) für das Deckband (6) oder den Bandförderer (5) gelagert ist.

5. Umlenkstation nach Anspruch 2, dadurch gekennzeichnet, daß der Rollenhalter (68) auf beiden Seiten des Bandförderers (5) mit Laufrollen (64, 65) versehen ist, denen auf jeder Seite des Bandförderers (5) eine mit einem seiner Bandabschnitte (10 bzw. 11) bewegungsmäßig zu einer Einheit verbundene Tragschiene (87 bzw. 88) zugeordnet ist.

6. Umlenkstation nach den Ansprüchen 4 und 5, dadurch gekennzeichnet, daß die Lagerachsen (60, 61) der Stützrollen (42, 43) gleichzeitig die Lagerachsen der Laufrollen (64, 65) bilden.

7. Umlenkstation nach einem der Ansprüche 1 bis 6, dadurch gekennzeichnet, daß das Tragerrüst (3) zwei Tragsegmente (26, 27) aufweist, die je im Bereich einer Längsseite des Bandförderers (5) auf einem Achssegment (28, 29) gelagert und mittels Stellmittel (33 bzw. 34) auf diesem einstellbar sind, wobei die beiden Achssegmente (28, 29) auf einem gemeinsamen, die Umlenkachse verkörpernden Achsbalken (30) befestigt sind.

**Revendications**

1. Station de renvoi (7, 8) pour un transporteur à courroie (5) monté dans des installations de chargement ayant des sections verticales et horizontales et comportant une semelle (5b) à bordures ondulées renfermée par une bande couvrante qui comprend au moins deux sections (9, 10, 11) dont l'une peut changer de position par rapport à l'autre et des rouleaux d'appui (41, 42, 43) disposés par groupes sur un bâti de support (3) aux emplacements de renvoi de la bande et constituant les emplacements d'appui du transporteur à courroie et de la bande couvrante, caractérisée en ce que les rouleaux d'appui (42, 43) situés à l'extérieur dans le sens radial dans les groupes de rouleaux d'un certain nombre au moins d'emplacements d'appui (79) de la bande couvrante (6) ou du transporteur à courroie (5) sont montés sur un support de rouleaux (68) qui peut se déformer pour suivre les mouvements du transporteur à courroie ou de la bande couvrante.

2. Station de renvoi selon la revendication 1, caractérisée en ce que le support de rouleaux (68) a la structure d'une chaîne articulée dont l'une des extrémités s'ancre par une articulation sur le bâti porteur (26, 26a; 27, 27a) et donc l'autre extrémité est reliée à des dispositifs de tension (75 à 78).

3. Station de renvoi selon la revendication 2, caractérisée en ce que le support de rouleaux (68) est constitué par des jougs de palier (67) qui relient le transporteur à courroie (5) et la bande couvrante (6) sont reliés l'un à l'autre par des articulations (71) par des organes de liaison (69, 70), et, prennent appui, par leurs deux extrémités, sur des éléments porteurs (44, 45) qui sont fixés sur le cadre proteur (26, 27), sont guidés (46, à 49) dans le sens radial et peuvent être réglés par des dispositifs de positionnement (52, 53).

4. Station de renvoi selon la revendication 3, caractérisée en ce que chaque joug de palier (67) est composé d'une traverse (66) recouvrant le transporteur à courroie (5) et la bande couvrante (6) et deux corps de palier (62, 63) reliés à cette traverse de manière à former une unité avec elle et situés sur les bords longitudinaux du transporteur à courroie (5), chacun de ces corps de palier contenant au moins un axe de palier (60 ou 61) sur lequel est monté un rouleau d'appui (42 ou 43) pour la bande couvrante (6) ou le transporteur à courroie (5).

5. Station de renvoi selon la revendication 2, caractérisée en ce que le support de rouleaux (68) comporte, des deux côtés du transporteur à courroie (5), des galets (64, 65) auxquel correspond, de chaque côté du transporteur à courroie (5), un rail de support (87 ou 88) qui, pour les déplacements, est solidaire de l'un des secteurs (10 ou 11) de bande du transporteur à courroie.

6. Station de renvoi selon les revendications 4 et 5, caractérisée en ce que les axes de palier (60, 61) des rouleaux d'appui (42, 43) constituent en même temps les axes de palier des galets (64, 65).

7. Station de renvoi selon l'une des revendications 1 à 6, caractérisé en ce que le bâti de support (3) comporte deux segments porteurs (26, 27) qui sont montés chacun sur palier au niveau d'un côté longitudinal du transporteur à courroie (5) sur un segment d'axe (28, 29) et peuvent être réglés au moyen du dispositifs de positionnement (33 ou 34) sur ce segment d'axe, les deux segments d'axe (28, 29) étant fixés sur une entretoise (30) commune constituant l'axe de renvoi.

**Claims**

1. Deflection station (7, 8) for a band conveyor (5) arranged in handling installations with vertical and horizontal conveying branches, with a belt (5b) with a corrugated edge which is closed off by a cover band and comprises at least two sections (9, 10, 11), one of which is changeable in its position in relation to the other, and with backing rolls (41, 42, 43) arranged in groups on a supporting framework (3) corresponding to the band deflection, which rolls form the support points for the band conveyor and the cover band, characterized in that the backing rolls (42, 43), lying radially outside, of the roll groups, at least of a number of support points (79) of the cover band (6) or of the band conveyor (5) are arranged on a roll holder (68) which is changeable in form, following the movement of the band conveyor or respectively cover band.

2. Deflection station according to Claim 1, characterized in that the roll holder (68) is constructed in the manner of an articulated chain, one end of which is articulatedly anchored to the supporting framework (26, 26a; 27, 27a) and the other end of which is connected to tension means (75 to 78).

3. Deflection station according to Claim 2, characterized in that the roll holder (68) consists of the band conveyor (5) and bearing yokes (67) which stretch over the cover band (6), which are connected articulatedly (71) with each other by connecting members (69, 70), and each rest with their two ends on supporting elements (44, 45) attached to the supporting framework (26, 27), which are guided radially (46 to 49) and are adjustable by adjusting means (52, 53).

4. Deflection station according to Claim 3, characterized in that each bearing yoke (67) is composed of a traverse (66) overlapping the band conveyor (5) and cover band (6), and also two bearing bodies (62, 63) connected therewith into one unit, and arranged on the longitudinal sides of the band conveyor (5), which each receive at least one bearing axle (60 resp. 61) on which a backing roll (42 resp. 43) for the cover band (6) or the band conveyor (5) is mounted.

5. Deflection station according to Claim 2, characterized in that the roll holder (68) is provided on both sides of the band conveyor (5) with running rollers (64, 65) of which there is arranged on each side of the band conveyor (5), a supporting rail (87 resp. 88) movably connected into one unit with one of its band sections (10 resp. 11).

6. Deflection station according to Claims 4 and 5, characterized in that the bearing axles (60, 61) of the backing rolls (42, 43) at the same time form the bearing axles of the running rollers (64, 65).

7. Deflection station according to one of Claims 1 to 6, characterized in that the supporting framework (3) has two supporting segments (26, 27) which are each mounted in the region of a longitudinal side of the band conveyor (5) on an axis segment (28, 29) and are adjustable thereon by adjusting means (33 resp. 34), in which the two axis segments (28, 29) are attached to a common axis beam (30) which embodies the deflection axis.

FIG.1

FIG.2

FIG.3

0 080 625

FIG.4

FIG. 5

FIG.6